# FASCICULE DE BREVET EUROPEEN

(11) **EP 3 949 026 B1**
(45) Date de publication et mention de la délivrance du brevet: **08.11.2023**
(21) Numéro de dépôt: 20712370.4
(22) Date de dépôt: 25.03.2020
(51) Int. Cl.: H01R 13/405, H01R 13/66, G01K 7/02, G01K 7/12

(54) **CAPTEUR DE TEMPÉRATURE POUR MOTEUR DE VÉHICULE ET PROCÉDÉ DE FABRICATION D'UN TEL CAPTEUR**
TEMPERATURSENSOR FÜR FAHRZEUGMOTOR UND DESSEN HERSTELLUNGSVERFAHREN
TEMPERATURE SENSOR FOR VEHICLE ENGINE AND MANUFACTURING METHOD THEREOF

(30) Priorité: 26.03.2019 FR 1903137
(43) Date de publication de la demande: 09.02.2022
(73) Titulaire: SC2N, 94046 Creteil Cedex (FR)
(72) Inventeur: KOPP, Gabriel, 95892 CERGY PONTOISE (FR); SERVETTAZ, Aurélien, 95892 CERGY PONTOISE (FR); PRADIER, David, 95892 CERGY PONTOISE (FR); COUASSE, Philippe, 95892 CERGY PONTOISE (FR)
(74) Mandataire: Garcia, Christine
(86) Numéro de dépôt international: PCT/EP2020/058258
(87) Numéro de publication internationale: WO 2020/193593

(56) Documents cités:
- WO-A1-2018/002547
- CN-U- 202 840 043
- DE-A1-102017 115 976
- US-A1- 2005 112 956

## Description

La présente invention concerne un capteur de température pour moteur de véhicule et son procédé de fabrication. L'invention concerne en particulier un capteur thermocouple.

Les capteurs de température comprenant un thermocouple pour mesurer les hautes températures sont largement utilisés dans le domaine des systèmes d'échappement de moteur à combustions interne. Les thermocouples fournissent une précision de mesure relativement élevée. C'est pourquoi ils sont utilisés dans ce domaine ayant des exigences élevées en termes de contrôle d'émissions de polluants.

Le principe de mesure des thermocouples est basé sur l'effet Seebeck qui se traduit par une différence de potentiel entre deux fils métalliques différents lorsqu'ils sont soumis à une différence de température. Les deux fils métalliques sont soudés entre eux à une première extrémité formant une jonction chaude (ou point chaud) destinée à mesurer la température T1 du milieu à mesurer, comme par exemple la température des gaz d'échappement d'un système d'échappement. Les deux fils métalliques du thermocouple comportent également chacun une deuxième extrémité reliée chacune à un voltmètre par une jonction froide (ou point froid) qui est à une température de référence T0.

Ce type de capteur de température est connu pour comprendre un circuit imprimé (PCB) comportant un circuit intégré intégrant le voltmètre. Le circuit intégré est un circuit intégré à application spécifique ASIC (Application Spécifie for Integrated Circuit) capable de traiter des signaux de tension pour les convertir en température. Il est capable de fournir un signal de sortie analogique ou numérique et d'utiliser un protocole numérique de type SENT (Single Edge Nibble Transmission) ou PWM (Pulsed Width Modulation) ou encore PSI (Peripheral Sensor Interface).

Les capteurs de température de l'art antérieur, tel que celui décrit dans la demande WO2018002547 A1, comprennent classiquement un boitier contenant une carte électronique sur laquelle sont brasées plusieurs cosses. Les cosses sont serties - et potentiellement soudées - sur l'âme métallique d'un fil multibrin. Cette connexion
est, dans le cas d'un capteur thermocouple, appelée la jonction froide. L'âme métallique de chaque fil est revêtue d'un isolant. Un joint silicone également serti sur la cosse assure l'étanchéité entre cet isolant et une cassette, laquelle dispose de nervures qui sont refondues lors de la fabrication du boitier par injection plastique. La fusion de ces nervures avec la matière plastique du boitier assure l'étanchéité entre cassette et boitier.

Ce type de capteur présente plusieurs inconvénients. Un des inconvénients provient d'une étanchéité insuffisante du boitier due au fait que la fusion des nervures dans la matière plastique du boitier n'est pas parfaite. Un autre inconvénient est lié à la complexité de ce type de capteur, ce qui entraine une fabrication compliquée et un temps de montage élevé.

Référence est également faite ici au capteur de température de l'art antérieur décrit dans la demande DE102017115976 A1.

La présente invention a donc pour objectif de pallier les inconvénient de l'art antérieur mentionné ci-dessus en proposant un capteur de température dont l'étanchéité du boitier et la complexité du capteur sont améliorées.

Pour cela la présente invention telle que revendiquée propose un capteur de température pour moteur de véhicule, comprenant : un boitier contenant une carte électronique et traversé par au moins une paires de fils munie de cosses, la cosse étant constituée d'une portion sertie sur un conducteur disposé dans le boiter,
un connecteur comportant au moins un insert métallique assurant la connexion électrique avec la carte électronique.
caractérisé en ce que le boitier comporte au moins une bride de maintien des cosses, les cosses étant pliées, la bride étant fixée au boitier par l'intermédiaire de la déformation plastique d'au moins un pion de maintien aménagé dans le boitier, le diamètre d'un pion étant supérieur ou égal à 1.5mm.

Selon un mode de réalisation de l'invention, la bride est en matière chargée en fibre, par exemple 45%, la charge en fibre de la bride étant supérieure à celle du boitier.

Selon un mode de réalisation de l'invention, la bride comporte : une première portion formée par le pliage d'une tôle d'un alliage de cuivre, cette première portion de la cosse étant pliée après insertion dans le boitier, d'une butée axiale formée par un double pliage de la tôle qui la constitue, une deuxième portion sertie sur le conducteur, une troisième portion sertie sur un manchon filaire.

Selon un mode de réalisation de l'invention, le boitier comporte un logement de la cosse, avec une réduction de section passage assurant butée et guidage de la cosse.

Selon un mode de réalisation de l'invention, un jeu de guidage avec une hauteur est laissé entre la cosse et la bride, de préférence est égale à 0,05mm et est égale à 3mm.

Selon un mode de réalisation de l'invention non revendiqué, la cosse est pliée avec un angle α choisi de façon à ce que la cosse soit toujours en contact avec l'un des côté de la bride, de préférence cet angle est compris entre 1 et 3°.

Selon un mode de réalisation de l'invention, la zone d'appui de la bride est positionnée sur le boitier, afin qu'elle reste bien à plat, sans pivoter.

L'invention telle que revendiquée concerne également un procédé de fabrication d'un capteur de température pour moteur de véhicule dans lequel, lors de l'assemblage du capteur, les cosses sont insérées droites dans le boitier et pliées ensuite directement à l'intérieur à l'aide d'un outil de pliage, les cosses étant maintenues pas une bride, la bride étant fixée au boitier par l'intermédiaire de la déformation plastique d'au moins un pion de maintien aménagé dans le boitier, le diamètre d'un pion étant supérieur ou égal à 1.5mm.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- La [Fig. 1] est une représentation d'une vue en élévation d'un capteur de température selon un mode de réalisation de l'invention avec PCB mis en place,
- La [Fig. 2] est une représentation d'une vue en élévation d'un capteur de température selon un mode de réalisation de l'invention sans PCB mis en place,
- La [Fig. 3] est une représentation schématique d'une vue en coupe longitudinale d'un capteur de température selon un mode de réalisation de l'invention,
- La [Fig. 4] est une vue en élévation d'une partie d'un capteur de température selon un mode de réalisation de l'invention,
- La [Fig. 5] est une représentation schématique d'une vue en coupe transversale d'un capteur de température selon un mode de réalisation de l'invention,
- La [Fig. 6] est une représentation schématique d'une vue en coupe transversale d'un capteur de température selon un mode de réalisation de l'invention,
- La [Fig. 7] est une représentation d'une vue en élévation d'un capteur de température selon un mode de réalisation de l'invention sans PCB mis en place
- La [Fig. 8] est une représentation schématique d'une vue en coupe transversale d'un capteur de température selon un mode de réalisation de l'invention sans capot latéral,
- La [Fig. 9] est une représentation schématique d'une vue en coupe transversale d'un capteur de température selon un mode de réalisation de l'invention avec capot latéral,

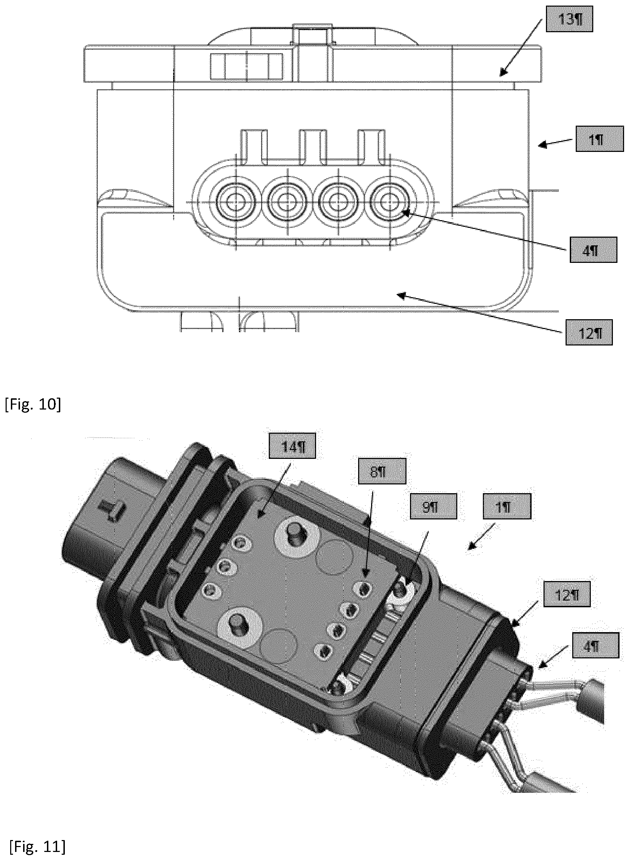

- La [Fig. 10] est une représentation d'une vue en élévation d'un capteur de température selon un autre mode de réalisation de l'invention avec PCB mis en place,
- La [Fig. 11] est une représentation d'une vue en élévation d'une partie d'un capteur de température selon un autre mode de réalisation de l'invention sans PCB mis en place,
- La [Fig. 12] est une représentation schématique d'une vue en coupe transversale d'un capteur de température selon un mode de réalisation de l'invention sans capot latéral,
- La [Fig. 13] est une représentation d'une vue en élévation vue de dessous d'un capteur de température selon un mode de réalisation de l'invention,
- La [Fig. 14] est une représentation complète d'un capteur de température selon un mode de réalisation de l'invention.

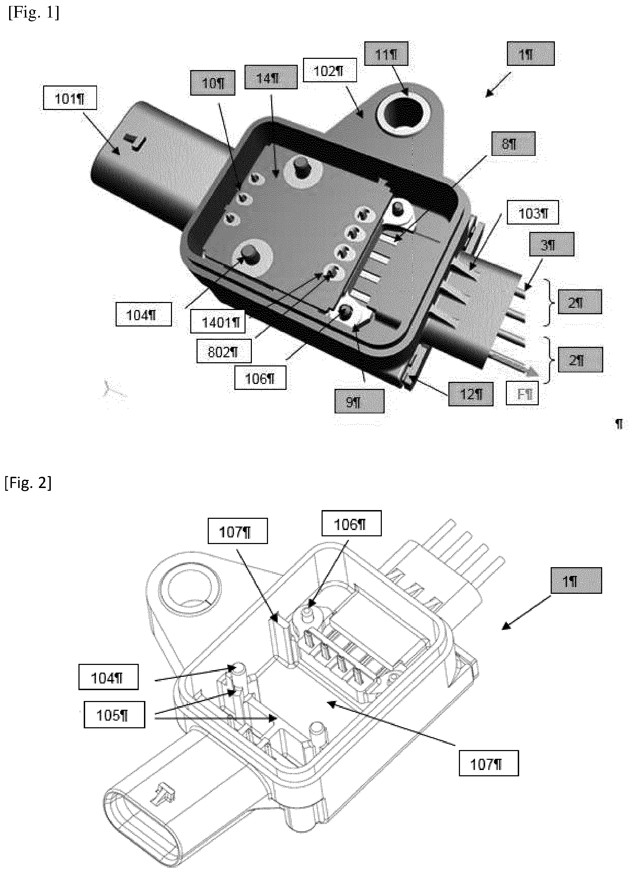

La figure 1 représente l'intérieur d'un capteur de température 1 pour moteur de véhicule selon l'invention.

Un véhicule dans le cadre de l'invention, est tout type de véhicule terrestre, et par exemple automobile et camion, ou aériens.

Le capteur selon l'invention, illustré figures 1, 2 et 3, comprend un boitier 1 contenant une carte électronique 14, également appelé PCB (printed circuit board selon la terminologie anglaise). Le boitier 1 est traversé par au moins une paires 2 de fils 3 munie de cosses 8 et de joints manchons filaires 6 tous deux sertis. Selon un mode de réalisation de l'invention, la matière du boitier 1 est un thermoplastique tel que par exemple du PA66, PA6, PBT, PPS ou bien PPA. Le boitier 1 est en matière chargée en fibre, et par exemple 30 % de fibres.

La carte électronique 14 est disposée dans le boitier 1 et repose sur plusieurs zones d'appui 105. Ces zones d'appui sont formées autour de pions 104, 106. Les pions 104, 106 sont déformés à chaud, par exemple par bouterollage, pour fixer la carte de façon définitive. La position des pions et leur diamètre sont choisis afin d'assurer la robustesse du maintien de la carte 14 notamment en situation de vibration. Les pions 104, 106 ont par exemple, chacun, un diamètre supérieur ou égal à 2,5mm. Selon un mode de réalisation de l'invention, les pions 104, 106 sont situés entre le premier tiers et la moitié de la carte pour limiter les vibrations.

Le boitier 1 comporte un connecteur 101, et au moins une bride 102, de maintien des cosses, avec insert surmoulé 11. Le connecteur 101 comporte au moins un insert métallique 10, par exemple en bronze ou en laiton, assurant la connexion électrique avec la carte électronique 14.

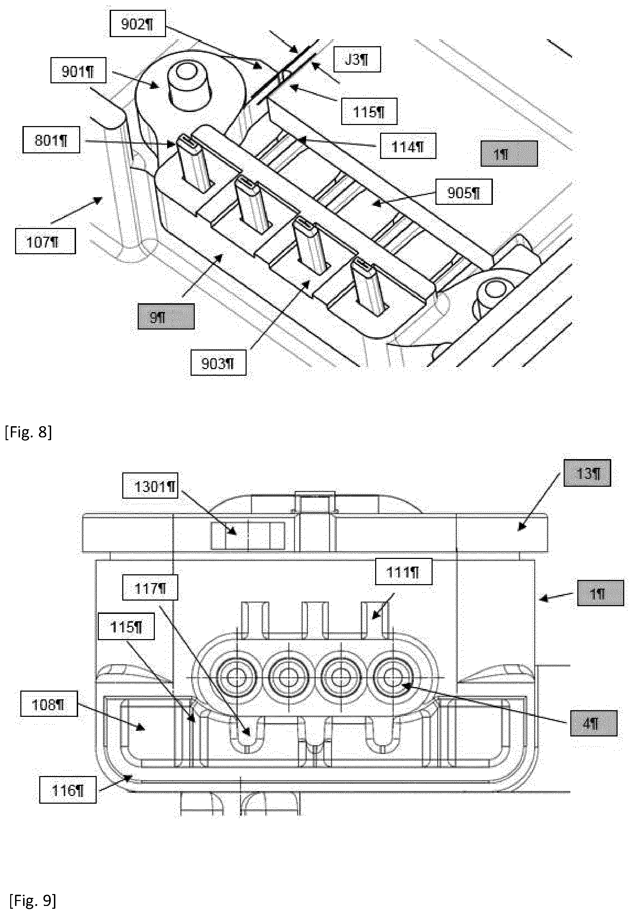

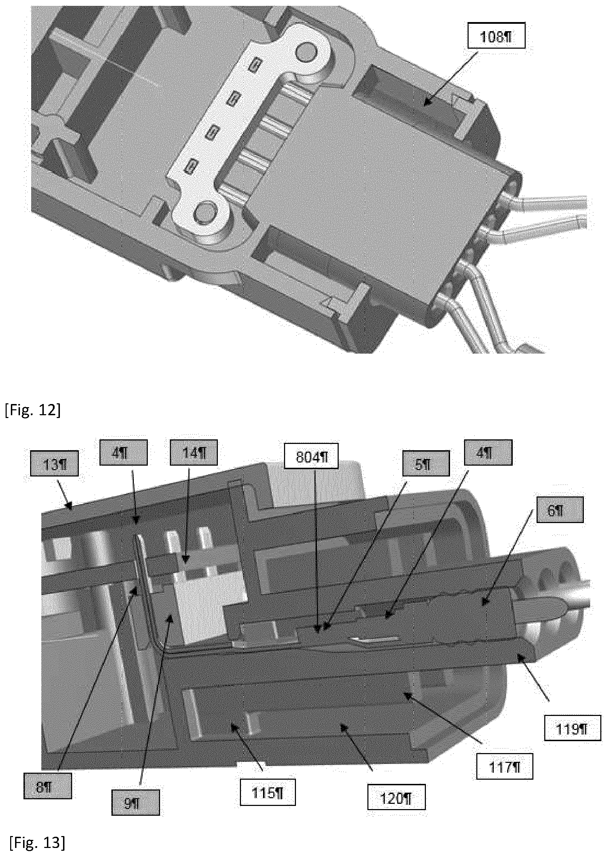

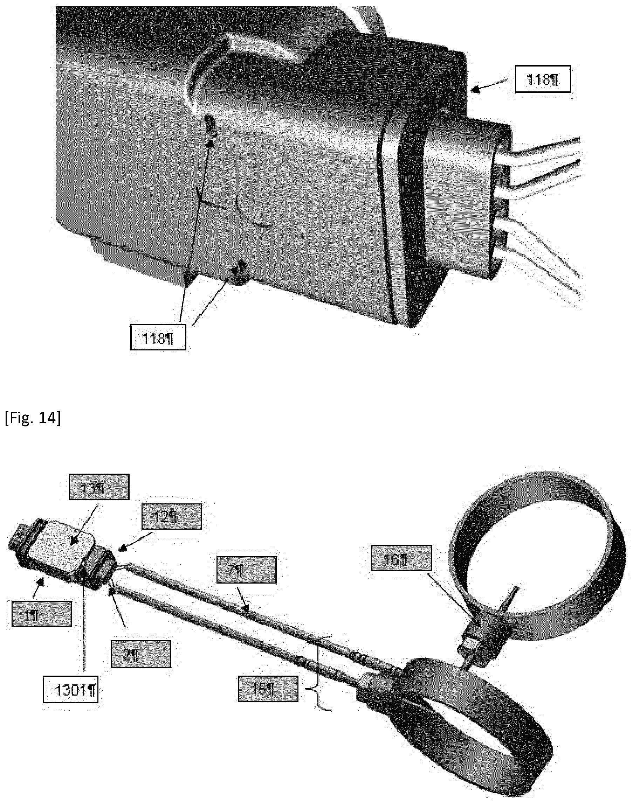

Comme illustré figures 9, 12 et 14 le boitier 1 comporte un capot principal 13. Ce capot referme le boitier 1 et protège ainsi la carte électronique 14 de l'environnement extérieur (humidité, pollution, liquides). Ce capot 13 est fixé de façon étanche au boitier 1 par collage, par vibration ou par soudure laser.

Dans le cadre de l'invention, comme illustré figures 2, 3 et 12, la bride 9 est fixée au boitier 1 par l'intermédiaire de la déformation plastique d'au moins un pion de maintien 106 aménagé dans le boitier 1. Selon un mode de réalisation de l'invention, la bride est fixée par deux pions de maintien 106. Selon l'invention telle que revendiquée, le diamètre d'un pion 106 est supérieur ou égal à 1.5mm. Cela permet d'assurer une tenue en mécanique suffisante pour un chargement en traction F de 80N sur chaque fil 3.

Selon un mode de réalisation de l'invention, la déformation du pion est obtenue par fusion de la matière plastique du pion par chauffe, ce que l'on appelle bouterollage.

Selon un autre mode de réalisation de l'invention la déformation du pion est obtenue par soudure ultrason, entre par exemple 20 et 30kHz. La déformation par soudure ultrason a pour avantage un temps de cycle court, sans risque d'encrassement, et qui ne conserve pas de jeu résiduel après l'opération lié au retrait du plastique après refroidissement. Pour réaliser la soudure ultrason, des nervures 115 sont aménagées dans le boitier 1. Les nervures 115 visible figure 8 sont disposées parallèlement au pion de maintien 106 pour éviter un effondrement de la matière du boitier 1.

Selon un mode de réalisation de l'invention, la bride est en matière chargée en fibre, par exemple 45%. Selon un mode de réalisation de l'invention, la charge en fibre de la bride est supérieure à celle du boitier, cela permet d'éviter l'effondrement de la bride et la création d'un jeu résiduel après l'opération. La matière de la bride peut être un thermoplastique tel que PA66, PA6, PBT ou bien PPA.

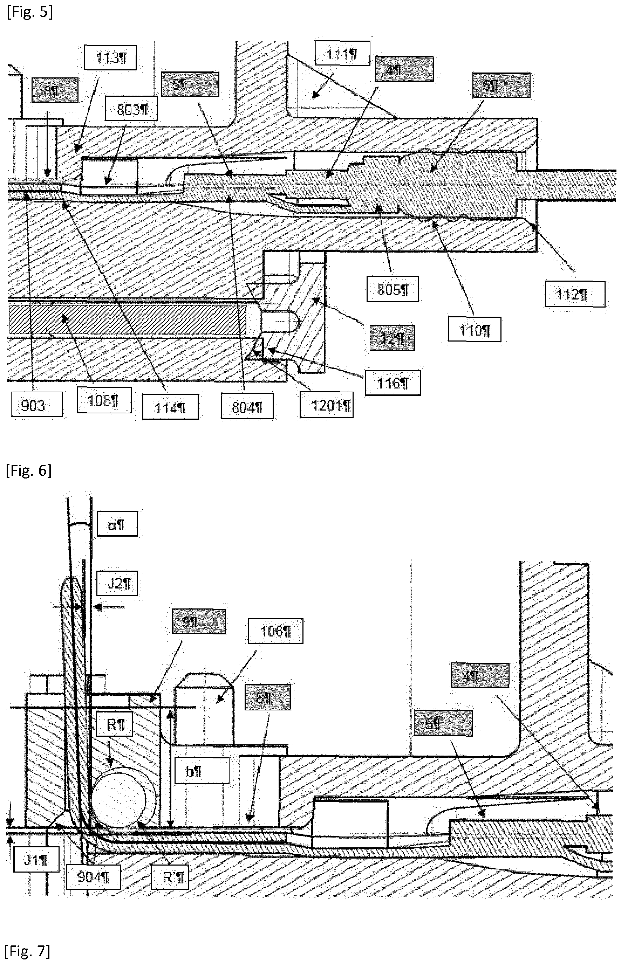

Comme illustré figures 6 et 7 deux zones d'appui 901 accueillent la matière fondue des pions de maintien 106. Un espace vide 905 est ménagé entre les deux zones d'appui 901. Cette espace vide 905 permet l'insertion d'un outillage plaquant les cosses dans le fond du boitier avant l'insertion de la bride 9. Cela garantit un positionnement répétable des cosses 8.

Selon un mode de réalisation de l'invention, un joint d'étanchéité est disposé dans l'espace vide 905 formé par la bride 9 et le boitier 1.

Le joint est une résine époxy mono ou bi-composant, ou bien un gel mono ou bi-composant. Ce joint permet d'assurer une totale étanchéité entre le conducteur 5 et l'isolant. Aucune humidité ne peut ainsi remonter à travers les fils 3, par capillarité entre brins du conducteur et isolant, jusqu'aux sondes de mesure 15. Cela améliore la précision et la robustesse du produit.

Selon un mode de réalisation de l'invention, un jeu J3 est ménagé entre la nervure 115 et la base 902 de l'appui 901. Le jeu J3 est par exemple supérieur ou égale à 0.1mm.

La bride 9 selon l'invention, permet d'assurer deux fonctions essentielles. La première est le positionnement précis et répétable des extrémités des cosses pliées 802 dans des trous métallisés aménagés dans la carte électronique 14. La deuxième est la garantie de la tenue à la traction des cosses 8 lorsqu'un effort F est exercé sur les fils 3.

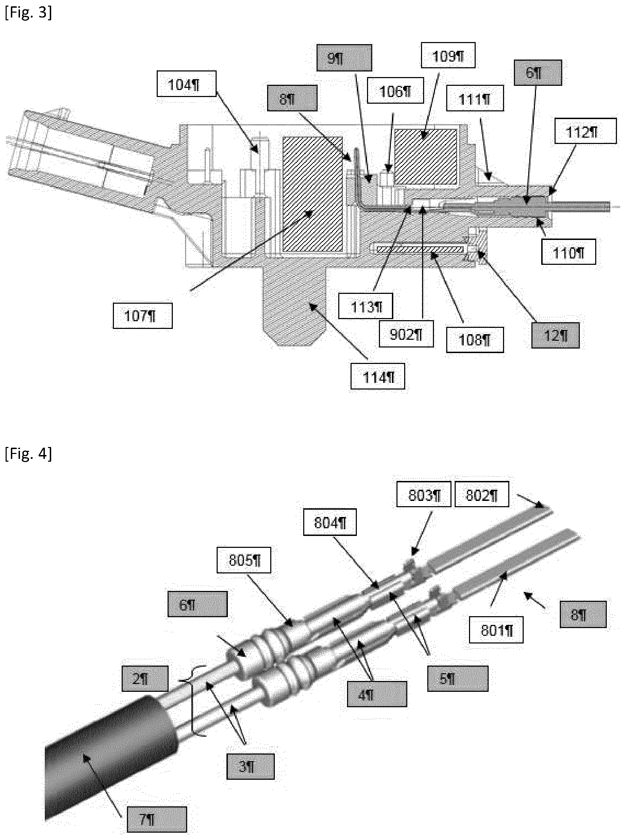

La cosse 8 illustrée, par exemple figure 4, comprend une première portion 801 formée par le pliage d'une tôle d'un alliage de cuivre. Cette première portion de la cosse est pliée après insertion dans le boitier 1. La cosse est également constituée d'une extrémité chanfreinée 802 avec revêtement déposé de façon sélective sur quelques mm. Le revêtement peut être une sous couche de 0,5 à 5 µm de nickel (Ni) et une couche de 0,5 à 5 µm de d'étain (Sn) pour favoriser la brasure sur la carte électronique 14. Ce dernier est absent de la zone de pliage de la cosse 8 afin de limiter le risque d'amorce de rupture et de permettre la compensation de la température froide par la matière du substrat des cosses 8 si celle-ci forme un thermocouple. Une couche de nickel (ou d'un autre métal conducteur) en surface égalise les charges électriques générées par le thermocouple qui forme les cosses (CuFe2P / CuNi10), et donc annule la compensation recherchée. Le chanfrein a pour but de faciliter l'insertion de la bride 9 lorsque le pliage est effectué.

Comme illustré figure 4 et 5, la cosse 8 est constituée d'une butée axiale 803 formée par un double pliage de la tôle qui la constitue. Cette butée axiale a pour but de fixer la position d'insertion de la cosse dans son logement 110 dans le boitier 1. Une réduction de la section de passage 114 de ce logement 110 assure cette butée sur la cosse 8 en même temps que de favoriser son guidage dans l'outil de pliage (non représenté).

Comme illustré figure 4, 5 et 14, la cosse 8 comprend une deuxième portion 804 sertie sur le conducteur 5. Selon un mode de réalisation de l'invention, dans le cas d'un capteur thermocouple, une soudure laser est réalisée pour réduire les risques de frettage du contact électrique. Cette deuxième portion 804 a par exemple un revêtement de nickel (Ni) pour faciliter la soudure laser, d'environ 0,5 à 5µm d'épaisseur. Cette deuxième portion est aussi appelée la jonction froide du thermocouple.

La cosse comprend également une troisième portion 805 sertie sur un manchon filaire 6 pour en assurer le maintien mécanique. Derrière le manchon s'étendent les fils 3 arrangés en paires 2 et protégé par une gaine par exemple en fibre de verre et silicone 7. A une autre extrémité de la paire de fil, se trouvent les sondes de température. Les sondes de température sont fixées à des bossages 16 de l'équipement ou conduite à instrumenter.

Selon un mode de réalisation de l'invention, dans le cas d'un capteur thermocouple, la cosse est formée d'un alliage de cuivre faiblement allié tel que CuFe2P pour pôle positif et un cupronickel tel que CuNi10 pour le pôle négatif. Cet alliage de cuivre est sous forme brute en tôle d'épaisseur de 0,2 à 0,4mm.

Selon un mode de réalisation de l'invention illustrée figure 3 à 5, le boitier comporte un chanfrein 112 pour faciliter l'insertion du manchon 6.

Dans le cadre de l'invention, lors de l'assemblage du capteur, les cosses 8 sont insérées droites dans le boitier 1 et pliées ensuite directement à l'intérieur à l'aide d'un outil de pliage, de sorte qu'aucun surmoulage n'est nécessaire.

Le boitier 1 comporte un espace libre 107 de façon à ce qu'un outil de pliage des cosses 8 soit introduit dans le boitier 1. Après le pliage, cet outil est retiré et laisse la place à la bride qui vient fixer définitivement les cosses.

Pour assurer les deux fonctions de la cosse données plus haut (positionnement extrémités sur carte électronique et résistance à la traction), plusieurs paramètres géométriques et matériaux sont nécessaires.

Dans le cadre de l'invention, un jeu de guidage J2 avec une hauteur h est laissé entre la cosse 8 et la bride 9. Selon un mode de réalisation de l'invention, le ratio J2/h est minimisé. Par exemple J2 est égale à 0,05mm et la hauteur est égale à 3mm. La minimisation de ce ratio joue en faveur des deux fonctions recherchées.

Dans le cadre de l'invention, la cosse est pliée avec un angle α choisi de façon à ce que la cosse 8 soit toujours en contact avec l'un des côté de la bride. Cet angle est par exemple compris entre 1 et 3°. Avec un contact privilégié toujours du même côté sur la bride, les dispersions de positionnement de l'extrémité de la cosse 802 dans le trou métallisé de la carte électrique 1401 sont minimisées.

Dans le cadre de l'invention, la zone d'appui de la bride 9 est positionnée sur le boitier 1, sous la zone 901, afin qu'elle reste bien à plat, sans pivoter. Pour cela, le jeu J1 entre la bride 9 et les cosses 8, est différent de zéro, et par exemple est égale à 0,05mm.

Dans le cadre de l'invention, la zone d'insertion de la cosses 8 dans la bride 9 est facilitée en 904 par un chanfrein d'un côté de la bride et un rayon de l'autre côté de la bride. Afin de ne pas abimer la cosse 8, le rayon de cosse R est choisi suffisamment grand, par exemple 0,9mm pour une épaisseur pliée de 0,6mm. Le rayon sur bride R' s'inscrit dans le rayon de courbure de la cosse 8 pour ne pas l'abimer.

Dans le cas d'un capteur thermocouple, le flux d'air provient par exemple de l'air extérieur au véhicule, lorsque le boitier n'est pas placé sous le cache moteur, ou dans une zone isolée. Dans cette configuration, une face du boitier est en contact avec le moteur, entre 50°C et 150°C, et la face opposée voit un flux d'air froid, entre -40°C à 10°C. Ce gradient entre les faces extérieures du boitier 1 génère dans le boitier un gradient entre la jonction froide du thermocouple 804 et la carte électronique 14 intégrant l'élément qui mesure la température froide.

Pour limiter ce gradient, au moins une cavité d'air 108 est aménagée entre la jonction froide 804 et la face inférieure et latérale du boitier 1.

Selon un mode de réalisation de l'invention, une deuxième cavité d'air 109 est aménagée entre la jonction froide et la face supérieure et latérale.

Ces cavités 108, 109 jouent le rôle d'isolant thermique et permettent un gain d'environ 10 degrés sur l'écart de température pour un gradient extérieur de 100°C.

Comme illustré figures 3, 4 et 5 la première cavité 108 est refermée par un capot latéral 12, afin d'éviter tout écoulement d'air dans cette zone. Selon un mode de réalisation le capot 12 est fixé de façon étanche sur le boiter 1. Le capot latéral 12 est par exemple fixé avec une soudure par ultrasons (20 à 30kHz) dont le temps de cycle est rapide. Pour cela, des vecteurs d'énergie 1201 sont aménagés sur la face interne du capot latéral 12 et sont fondus et mélangés avec la matière du boitier 1.

Selon un mode de réalisation de l'invention, le capot latéral 12 est formé avec la même matière que le boitier 1. Le boitier 1 comporte des nervures 117 internes et des zones d'appui 116 formées à l'extrémité de la paroi du boitier 1, qui permettent d'équilibrer la soudure sur tout le pourtour du capot 12. Les nervures internes 117 sont disposées dans la partie inférieure du boitier 1, sous la jonction froide 804. Le boitier comporte au moins deux trous 118 formés sous le boitier 1 pour l'échappement d'eau qui pourrait être retenue dans la première cavité 108.

Selon un mode de réalisation de l'invention, le boitier comporte des nervures 111 supplémentaires qui permettent d'assurer une meilleure rigidité du boitier 1. Ces nervures supplémentaires 111 sont disposées dans la partie supérieure du boitier 1.

Dans le cadre de l'invention les parties supérieure et inférieure du boitier, et de manière générale toutes les références à un sens de positionnement, sont définies par rapport à la face du boitier 1 comportant le capot 13 principal et qui est considérée comme la face supérieure du capteur.

Selon un autre mode de réalisation de l'invention illustrée figures 6, 7, 8 et 9, les première 108 et deuxième cavités 109 se rejoignent pour former une seule cavité 120. Cette cavité 120 entoure la jonction froide 804. Dans cette configuration, le boitier 1 comporte également les nervures internes 117 et supplémentaires 111, qui ont pour rôle de rigidifier la jonction froide, et qui ont aussi pour rôle d'équilibrer la soudure du capot latéral 12.

## Revendications

1. Capteur de température (1) pour moteur de véhicule, comprenant : un boîtier (1) contenant une carte électronique (14) et traversé par au moins une paires (2) de fils (3) munie de cosses (8), la cosse (8) étant constituée d'une portion (804) sertie sur un conducteur (5) disposé dans le boiter (1), un connecteur (101) comportant au moins un insert métallique (10) assurant la connexion électrique avec la carte électronique (14). **caractérisé en ce que** le boîtier comporte au moins une bride (9) de maintien des cosses (8), les cosses (8) étant pliées, la bride (9) étant fixée au boîtier (1) par l'intermédiaire de la déformation plastique d'au moins un pion de maintien (106) aménagé dans le boîtier (1), le diamètre d'un pion (106) étant supérieur ou égal à 1.5mm.

2. Capteur de température (1) selon la revendication 1, dans lequel la bride est en matière chargée en fibre, par exemple 45%, la charge en fibre de la bride étant supérieure à celle du boîtier (1).

3. Capteur de température (1) selon l'une quelconque des revendications 1 à 2, dans lequel la cosse (8) comporte :une première portion (801) formée par le pliage d'une tôle d'un alliage de cuivre, d'une butée axiale (803) formée par un double pliage de la tôle qui la constitue, une deuxième portion (804) sertie sur le conducteur (5),une troisième portion (805) sertie sur un manchon filaire (6).

4. Capteur de température (1) selon l'une quelconque des revendications 1 à 3, dans lequel le boîtier (1) comporte un logement (110) de la cosse (8), avec une réduction de section passage (114) assurant butée et guidage de la cosse (8).

5. Capteur de température (1) selon l'une quelconque des revendications 1 à 4, dans lequel un jeu de guidage (J2) avec une hauteur (h) est laissé entre la cosse (8) et la bride (9), de préférence (J2) est égale à 0,05mm et (h) est égale à 3mm.

6. Capteur de température (1) selon l'une quelconque des revendications 1 à 5, dans lequel la zone d'appui de la bride (9) est positionnée à plat sur le boîtier (1).

7. Procédé de fabrication d'un capteur de température (1) pour moteur de véhicule tel que défini par l'une quelconque des revendications 1 à 6, dans lequel, lors de l'assemblage du capteur, les cosses (8) sont insérées droites dans le boîtier (1) et pliées ensuite directement à l'intérieur à l'aide d'un outil de pliage, les cosses étant maintenues par au moins une bride (9), la bride (9) étant fixée au boîtier (1) par l'intermédiaire de la déformation plastique d'au moins un pion de maintien (106) aménagé dans le boîtier (1), le diamètre d'un pion (106) étant supérieur ou égal à 1.5mm

## Patentansprüche

1. Temperatursensor (1) für einen Fahrzeugmotor, umfassend: ein Gehäuse (1), das eine elektronische Karte (14) enthält und durch das mindestens ein Paar (2) von Drähten (3) verläuft, die mit Kabelschuhen (8) versehen sind, wobei der Kabelschuh (8) aus einem Abschnitt (804) gebildet ist, der auf einen im Gehäuse (1) angeordneten Leiter (5) gecrimpt ist, einen Verbinder (101), der mindestens einen Metalleinsatz (10) aufweist, der die elektrische Verbindung mit der elektronischen Karte (14) gewährleistet, **dadurch gekennzeichnet, dass** das Gehäuse mindestens einen Flansch (9) zum Halten der Kabelschuhe (8) aufweist, wobei die Kabelschuhe (8) gebogen sind, wobei der Flansch (9) mittels plastischer Verformung mindestens eines im Gehäuse (1) angeordneten Haltestifts (106) am Gehäuse (1) befestigt ist, wobei der Durchmesser eines Stifts (106) 1,5 mm oder mehr beträgt.

2. Temperatursensor (1) nach Anspruch 1, wobei der Flansch aus fasergefülltem Material gebildet ist, z. B. 45 %, wobei die Faserfüllung des Flansches größer als die des Gehäuses (1) ist.

3. Temperatursensor (1) nach einem der Ansprüche 1 bis 2, wobei der Kabelschuh (8) Folgendes aufweist: einen ersten Abschnitt (801), der durch Biegen eines Blechs aus einer Kupferlegierung gebildet ist, einen axialen Anschlag (803), der durch doppeltes Biegen des Blechs, aus dem er gefertigt ist, gebildet ist, einen zweiten Abschnitt (804), der auf den Leiter (5) gecrimpt ist, und einen dritten Abschnitt (805), der auf eine Drahthülse (6) gecrimpt ist.

4. Temperatursensor (1) nach einem der Ansprüche 1 bis 3, wobei das Gehäuse (1) eine Aufnahme (110) des Kabelschuhs (8) aufweist, mit einer Verringerung des Durchgangsquerschnitts (114), die den Anschlag und die Führung des Kabelschuhs (8) gewährleistet.

5. Temperatursensor (1) nach einem der Ansprüche 1 bis 4, wobei zwischen dem Kabelschuh (8) und dem Flansch (9) ein Führungsspiel (J2) mit einer Höhe (h) vorhanden ist, wobei vorzugsweise (J2) 0,05mm beträgt und (h) 3 mm beträgt.

6. Temperatursensor (1) nach einem der Ansprüche 1 bis 5, wobei der Auflagebereich des Flanschs (9) flach auf dem Gehäuse (1) positioniert ist.

7. Verfahren zur Herstellung eines Temperatursensors (1) für einen Fahrzeugmotor nach einem der Ansprüche 1 bis 6, wobei bei der Montage des Sensors die Kabelschuhe (8) gerade in das Gehäuse (1) eingeführt und anschließend mit Hilfe eines Biegewerkzeugs direkt innerhalb gebogen werden, wobei die Kabelschuhe durch mindestens einen Flansch (9) gehalten werden, wobei der Flansch (9) durch plastische Verformung mindestens eines im Gehäuse (1) vorgesehenen Haltestifts (106) am Gehäuse (1) befestigt wird, wobei der Durchmesser eines Stifts (106) 1,5 mm oder mehr beträgt.

## Claims

1. Temperature sensor (1) for an engine of a vehicle, comprising:
a casing (1) containing a circuit board (14) and traversed by at least one pair (2) of wires (3) provided with terminals (8), the terminal (8) being made up of a portion (804) crimped onto a conductor (5) arranged in the casing (1),
a connector (101) comprising at least one metal insert (10) ensuring the electrical connection with the circuit board (14),
**characterized in that** the casing comprises at least one flange (9) for holding the terminals (8), the terminals (8) being folded, the flange (9) being fixed to the casing (1) via the plastic deformation of at least one holding stud (106) provided in the casing (1), the diameter of a stud (106) being greater than or equal to 1.5 mm.

2. Temperature sensor (1) according to Claim 1, wherein the flange is made of fibre-containing material, for example with a fibre content of 45%, the fibre content of the flange being greater than that of the casing (1).

3. Temperature sensor (1) according to either one of Claims 1 and 2, wherein the terminal (8) comprises: a first portion (801) formed by folding a sheet of a copper alloy, an axial stop (803) formed by a double fold of the sheet constituting this, a second portion (804) crimped onto the conductor (5), a third portion (805) crimped onto a wire sleeve (6).

4. Temperature sensor (1) according to any one of Claims 1 to 3, wherein the casing (1) comprises a housing (110) for the terminal (8) with a reduction in passage section (114) ensuring the stoppage and guidance of the terminal (8).

5. Temperature sensor (1) according to any one of Claims 1 to 4, wherein a guidance play (J2) with a height (h) is left between the terminal (8) and the flange (9), preferably (J2) is equal to 0.05 mm and (h) is equal to 3 mm.

6. Temperature sensor (1) according to any one of Claims 1 to 5, wherein the support zone of the flange (9) is positioned flat on the casing (1).

7. Method for manufacturing a temperature sensor (1) for an engine of a vehicle as defined by any one of Claims 1 to 6, wherein, during assembly of the sensor, the terminals (8) are inserted straight into the casing (1) and then folded directly inside using a folding tool, the terminals being held by at least one flange (9), the flange (9) being fixed to the casing (1) via the plastic deformation of at least one holding stud (106) provided in the casing (1), the diameter of a stud (106) being greater than or equal to 1.5 mm.
